# DEMANDE DE BREVET EUROPEEN

(11) **EP 4 446 152 A1**
(43) Date de publication de la demande: **16.10.2024**
(21) Numéro de dépôt: 24167254.2
(22) Date de dépôt: 28.03.2024
(51) Int. Cl.: B60K 11/08

(54) **CALANDRE DE VÉHICULE AUTOMOBILE À ENTRÉE D'AIR VARIABLE**

(30) Priorité: 14.04.2023 FR 2303725
(71) Demandeur: Renault s.a.s, 92100 Boulogne Billancourt (FR)
(72) Inventeur: HAZELARD, Fabien, 78280 GUYANCOURT (FR)

(57) **Abrégé**

L'invention concerne une calandre de véhicule automobile comprenant : une traverse supérieure (30) et une traverse inférieure (32) délimitant une ouverture transversale (40) ; une pluralité de volets (42) présentant chacun deux bords latéraux opposés (52, 54) et deux pivots coaxiaux (72, 74), les pivots de chacun desdits volets étant respectivement montés à rotation dans lesdites traverses supérieure (30) et inférieure (32) ; des organes d'entraînement pour pouvoir entraîner lesdits volets (42) en pivotement entre une position transversale dans laquelle ils sont orientés transversalement pour obturer ladite ouverture transversale, et une position longitudinale dans laquelle ils libèrent ladite ouverture transversale (40). Lesdits organes d'entrainement comprennent une pièce transversale (86) reliée par une liaison hélicoïdale aux pivots desdits volets (42) montés dans l'une ou l'autre desdites traverses, pour pouvoir entraîner lesdits volets (42) en pivotement lorsque ladite pièce transversale (86) est entraînée en translation.

## Description

La présente invention se rapporte à une calandre de véhicule automobile permettant de moduler l'entrée d'air.

Les véhicules automobiles à motorisation thermique ou bien électrique requièrent une entrée d'air, à l'avant, de manière à pouvoir refroidir les éléments du groupe motopropulseur lorsqu'il est en fonctionnement.

Ainsi, la calandre, installée dans la face avant des véhicules, comporte usuellement une ouverture d'entrée d'air équipée d'une grille et qui s'étend transversalement. Aussi, les dimensions de l'ouverture sont prédéfinies et elles offrent un compromis entre une bonne aération du groupe motopropulseur et un bon coefficient de pénétration dans l'air du véhicule.

Toutefois, lorsque le véhicule automobile évolue à grande vitesse, l'entrée d'air à travers la grille provoque une résistance à l'avancement et il serait alors avantageux d'obturer l'ouverture. Mais lorsque le groupe motopropulseur est relativement chaud, par exemple en montagne, il est nécessaire à l'inverse que l'ouverture soit libre. Aussi, il a été imaginé de mettre en oeuvre des volets mobiles en pivotement en travers de l'ouverture et ainsi, de régler automatiquement les volets dans une position d'obturation de l'ouverture lorsque le véhicule évolue à grande vitesse, ou dans une position dans laquelle ils autorisent le passage de l'air à travers de l'ouverture lorsqu'un besoin de refroidissement du groupe motopropulseur est nécessaire.

On pourra se référer notamment au document WO2013092141, lequel divulgue de tels volets réglables.

Les volets sont ainsi mobiles entre une position dans laquelle ils s'étendent selon un plan parallèle au plan moyen défini par l'ouverture, lorsqu'ils l'obstruent, et une position dans laquelle ils s'en étendent sensiblement perpendiculairement pour la libérer.

Toutefois, ces volets sont agencés de chaque côté d'une zone médiane en volets gauches et en volets droits. Partant, les volets gauches sont entraînés dans un sens de rotation opposé au sens de rotation des volets droits. Ils sont alors actionnés usuellement au moyen de bielles ou de tringles en série, lesquelles sont entraînées par une motorisation électrique. Ces moyens sont relativement encombrant et nécessitent généralement deux motorisations distinctes pour pouvoir entraîner les volets droits et les volets gauches dans les deux sens opposés.

Aussi, un problème qui se pose et que vise à résoudre la présente invention est de fournir une calandre de véhicule automobile qui soit plus simple et également moins encombrante.

Dans le but de résoudre ce problème, il est proposé une calandre de véhicule automobile comprenant : une traverse supérieure et une traverse inférieure opposées l'une de l'autre, délimitant une ouverture transversale ; une pluralité de volets présentant chacun deux bords latéraux opposés et deux pivots coaxiaux opposés l'un de l'autre, les pivots de chacun desdits volets étant respectivement montés à rotation dans lesdites traverses supérieure et inférieure de manière à maintenir lesdits volets espacés parallèlement les uns des autres dans ladite ouverture selon une direction perpendiculaire auxdites traverses ; des organes d'entraînement pour pouvoir entraîner lesdits volets en pivotement entre une position transversale dans laquelle ils sont orientés transversalement bord à bord dans ladite ouverture transversale pour obturer ladite ouverture transversale, et une position longitudinale dans laquelle ils sont orientés longitudinalement pour libérer ladite ouverture transversale.

Lesdits organes d'entrainement comprennent une pièce transversale reliée par une liaison hélicoïdale aux pivots desdits volets montés dans l'une ou l'autre desdites traverses, pour pouvoir entraîner lesdits volets en pivotement lorsque ladite pièce transversale est entraînée en translation selon ladite direction perpendiculaire auxdites traverses.

Ainsi, une caractéristique de l'invention réside dans la mise en oeuvre d'une liaison hélicoïdale entre le pivot de chacun des volets et une pièce transversale de manière à pouvoir entraîner des volets en pivotement par le seul mouvement de la pièce transversale selon une direction parallèle aux axes de pivotement des volets. Préférentiellement, ladite pièce transversale s'étend entre lesdits volets et ladite une ou l'autre desdites traverses. On prévoit ainsi un espace libre suffisamment important entre la traverse et l'extrémité des volets pour pouvoir y loger la pièce transversale. Par ailleurs, les pivots présentent une longueur suffisamment importante pour traverser la pièce transversale et rejoindre la traverse.

Selon un mode de réalisation de l'invention particulièrement avantageux, mais nullement limitatif, lesdits pivots présentent chacun une rainure hélicoïdale, tandis que ladite pièce transversale présente une pluralité de doigts venant respectivement en prise dans les rainures hélicoïdales. Autrement dit, chacun des doigts de la pièce transversale vient s'étendre dans une rainure hélicoïdale du pivot d'un volet. Et lorsque la pièce transversale est entraînée suivant l'axe des pivots, chaque doigt est entraîné en translation et coopère avec la rainure dans laquelle il s'étend pour entraîner le pivot en rotation et par conséquent le volet lui-même. Préférentiellement, ladite pièce transversale est méplate et elle présente une pluralité d'orifices adaptés à recevoir lesdits pivots. La pièce transversale présente ainsi un alignement d'une pluralité d'orifices pratiqués dans sa plus faible épaisseur. Les orifices sont espacés d'une même distance correspondant à l'espacement entre les volets.

Selon un mode de mise en oeuvre privilégié, les doigts s'étendent respectivement radialement en saillie dans lesdits orifices. Comme on l'expliquera plus en détail dans la suite de la description, les doigts présentent avantageusement une extrémité libre hémisphérique, tandis que la rainure hélicoïdale présente une section droite en U. Par ailleurs, la position des doigts à l'intérieur de la succession d'orifices peut être alternée de manière à mieux répartir les efforts exercés par la pièce transversale méplate sur les pivots.

Préférentiellement, lesdits organes d'entraînement comprennent un arbre monté à rotation le long de ladite une ou l'autre desdites traverses et des pattes de commande s'étendant radialement dudit arbre pour pouvoir coopérer avec ladite pièce transversale. Ainsi, les pattes de commande forment des cames qui viennent transformer le mouvement de rotation de l'arbre en mouvement de translation de la pièce transversale.

Selon un mode de mise en oeuvre de l'invention préféré, lesdites pattes de commande sont reliées à ladite pièce transversale par une liaison rotule. Par exemple, l'extrémité libre des pattes de commande est sensiblement sphérique, tandis que la pièce transversale présente une cage à l'intérieur de laquelle est emprisonnée l'extrémité libre de la patte de commande. De la sorte, la pièce transversale peut être entraînée en translation dans deux sens opposés en entraînant l'arbre lui-même en rotation dans deux sens opposés.

Avantageusement, lesdits organes d'entraînement comprennent un motoréducteur pour commander ledit arbre en rotation. Le motoréducteur est aisément commandable au moyen d'une alimentation électrique appropriée. Il peut d'ailleurs être commandé automatiquement en fonction des conditions de roulage du véhicule automobile.

En outre, ladite pièce transversale s'étend préférentiellement, entre lesdits volets et ladite traverse supérieure.

Aussi, lesdits volets sont divisés en deux demi-pluralités de volets opposées l'une de l'autre par rapport à une zone médiane, tandis que lesdits organes d'entrainement comprennent deux pièces transversales opposées l'une de l'autre et reliées respectivement par une liaison hélicoïdale aux pivots des volets desdites deux demi-pluralités de volets. Partant, les organes d'entraînement comprennent deux arbres qui s'étendent à l'opposé l'un de l'autre d'un seul motoréducteur situé dans la zone médiane. Conséquemment, les rainures hélicoïdales sont pratiquées dans des sens opposés, entre les pivots des volets droits et les pivots des volets gauches, comme on l'expliquera plus en détail ci-après.

En outre, les pas des rainures hélicoïdales peuvent différer d'un volet à l'autre pour les faire pivoter selon des amplitudes différentes. Par exemple, les volets rapprochés de la zone médiane peuvent être entraînés selon une plus grande amplitude par rapport aux volets écartés de la zone médiane.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique de face d'un véhicule automobile équipé d'une calandre conforme à l'invention ;
[Fig. 2] est une vue schématique en perspective de trois quarts arrière gauche de la calandre selon invention ;
[Fig. 3] est une vue schématique de détail en perspective de l'objet de la [Fig. 2] ;
[Fig. 4] est une vue schématique de détail en perspective de l'objet de la [Fig. 3] ;
[Fig. 5] est une autre vue schématique de détail en perspective de l'objet de la [Fig. 2] ;
[Fig. 6] est une vue schématique de détail en perspective de l'objet de la [Fig. 5];
[Fig. 7] est une autre vue schématique de détail en perspective de l'objet de la [Fig. 5] ;
[Fig. 8] est une vue schématique de détail en perspective selon un autre mode de réalisation ; et,
[Fig. 9] est encore une autre vue schématique de détail en perspective de l'objet de la [Fig. 2].

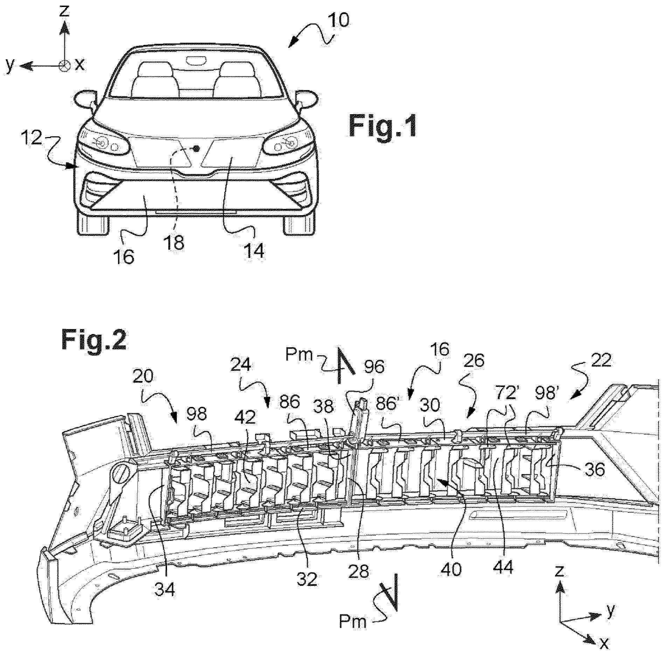

La [Fig. 1] montre un véhicule automobile 10, vu de face, et il s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite lorsque l'on est en situation de roulage ; et l'axe Z s'étend selon une direction verticale, orienté à l'opposé du sol.

Le véhicule automobile 10 est équipé, sur sa face avant, d'une calandre 12 présentant une partie supérieure 14 et une partie inférieure 16. Aussi, le véhicule 10 comporte un compartiment avant 18 dans lequel est logé un groupe motopropulseur non représenté et situé en arrière de la calandre 12.

Aussi, on décrira tout d'abord d'une façon générale, vu de trois quarts arrière gauche et en référence à la [Fig. 2], la partie inférieure 16 de la calandre 12, laquelle fait l'objet de l'invention. On observera que la partie supérieure 14 pourrait également faire l'objet de l'invention.

La partie inférieure 16 de la calandre est galbée. Elle s'étend longitudinalement selon la composante Y, et vue selon la composante -X, d'une extrémité gauche 20 à une extrémité droite 22. Elle présente une partie gauche 24 symétrique d'une partie droite 26 par rapport à un plan médian Pm. Aussi, le plan médian Pm coupe la partie inférieure 16 dans une zone médiane 28.

En outre, la partie inférieure 16 présente un cadre défini par une traverse supérieure 30 opposée à une traverse inférieure 32. La traverse supérieure 30 et la traverse inférieure 32 sont réunies à l'extrémité gauche 20 par un montant gauche 34 et à l'opposé, à l'extrémité droite 22, par un montant droit 36. De plus, les deux traverses 30, 32 sont reliées ensemble par un montant médian 38.

La traverse supérieure 30 et la traverse inférieure opposée 32 définissent ainsi une ouverture transversale 40.

Entre les traverses supérieure 30 et inférieure 32 viennent s'étendre des volets, des volets gauches 42, dans la partie gauche 24 et des volets droits 44, dans la partie droite 26. Les volets gauches 42 et les volets droits 44 obturent ici l'ouverture transversale 40.

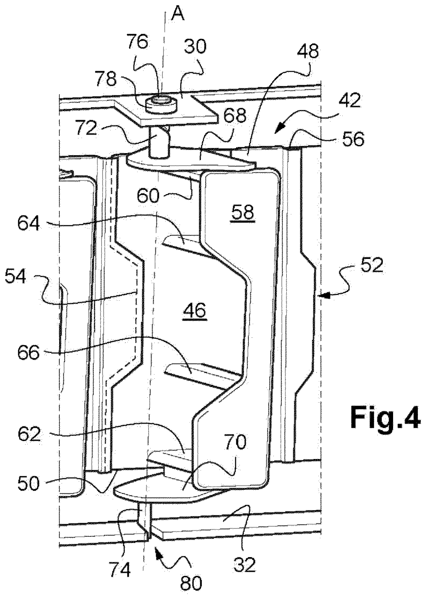

On se référera à la [Fig. 4] afin de décrire plus en détail un volet gauche 42. Ainsi, il présente une face arrière 46, et un bord supérieur 48 opposé à un bord inférieur 50. Il présente en outre un bord en saillie 52 opposé à un bord échancré 54, ici partiellement masqué par le bord en saillie du volet contigu.

On observera que le bord en saillie 52 présente une forme complémentaire du bord échancré 54 pour que les volets 42 puissent coopérer les uns avec les autres et obturer l'ouverture transversale 40. De surcroît, pour assurer une meilleure étanchéité entre les volets 42, le bord en saillie 52 présente un soyage 56 permettant de former un décrochement dans lequel vient s'appuyer le bord échancré du volet contigu. Aussi, le volet 42 comprend une paroi arrière 58 maintenue sensiblement parallèlement à distance de la face arrière 46 par l'intermédiaire d'une entretoise supérieure 60 opposée à une entretoise inférieure 62 et de deux entretoises intermédiaires 64, 66.

En outre, il comprend d'une part, un flasque supérieur 68 solidaire de l'entretoise supérieure 60 et s'étendant sensiblement au droit du bord supérieur 48, et d'autre part un flasque inférieur 70 solidaire de l'entretoise inférieure 62, et s'étendant sensiblement au droit du bord inférieur 50.

Les deux flasques 68, 70 sont symétriques l'un de l'autre par rapport à un plan axial, ou transversal, divisant le volet gauche 42 en deux.

Aussi, le volet gauche 42 comprend un pivot supérieur 72 s'étendant en saillie du flasque supérieur 68 et à l'opposé, un pivot inférieur 74 qui s'étend du flasque inférieur 70 coaxialement au pivot supérieur 72. Les pivots supérieur 72 et inférieur 74 définissent un axe de rotation A du volet 42.

Et le pivot supérieur 72 est monté à rotation à travers la traverse supérieure 30 et il est terminé par une tête 76 formant épaulement et venant en appui sur un collet 78 solidaire de la traverse supérieure 30. De la sorte, le volet 42 est suspendu à la traverse supérieure 30 par l'intermédiaire de la tête 76 du pivot supérieur 72. Partant, le volet 42 est bloqué en translation, de la traverse supérieure 30 vers la traverse inférieure 32.

À l'opposé, le pivot inférieur 74 est maintenu en prise dans une gorge en U 80 ménagée dans la traverse inférieure 32.

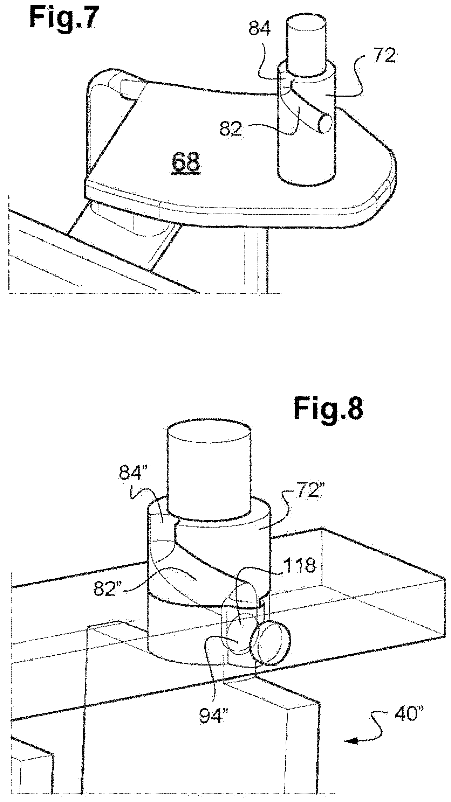

On décrira à présent en détail le pivot supérieur 72 en regard de la [Fig. 7]. On retrouve ainsi le flasque supérieur 68 duquel vient s'étendre en saillie le pivot supérieur 72. Il présente ainsi une rainure hélicoïdale 82 s'étendant sensiblement sur un quart de la surface cylindrique du pivot supérieur 72. La rainure hélicoïdale 82 présente une section droite en U.

Par ailleurs, on observera que la rainure hélicoïdale 82 se prolonge par une portion de rainure axiale supérieure 84, à l'opposé du flasque supérieur 68.

Sur cette [Fig. 7] le pivot supérieur 72 a été débarrassé de sa tête.

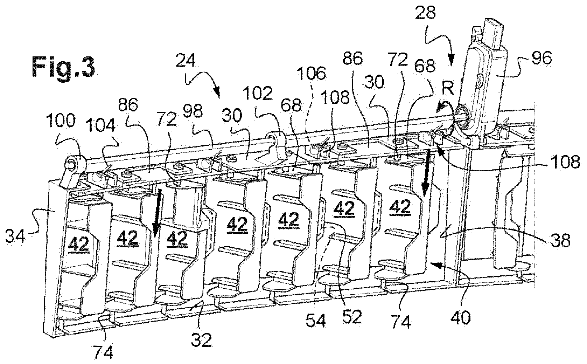

On se reportera à la [Fig. 3] montrant la partie gauche 24 de la partie inférieure 16 de calandre.

On retrouve les volets gauches 42 espacés régulièrement les uns des autres et orientés transversalement pour obturer l'ouverture transversale 50.

Aussi, entre la traverse supérieure 30 et le flasque supérieur 68 de tous les volets gauches 42, est étendue une pièce transversale méplate 86 que traversent tous les pivots supérieurs 72.

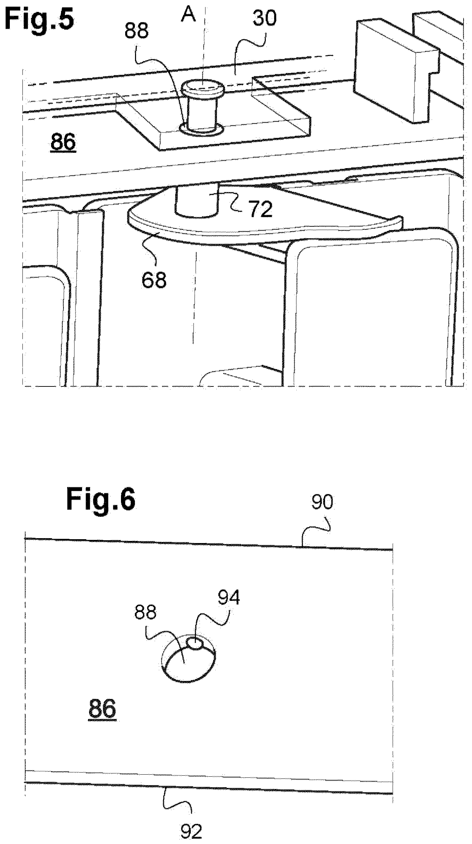

Chaque pivot 72 traverse ainsi la pièce méplate 86 à travers un orifice 88 que l'on retrouve illustré en détail sur la [Fig. 6]. Il est ménagé sensiblement perpendiculairement aux deux grandes faces opposées de la pièce méplate 86, dans son épaisseur, et à équidistance des deux bords longitudinaux opposés 90, 92. Aussi, on aperçoit à l'intérieur de l'orifice 88 un doigt 94 dont l'extrémité est hémisphérique. Le doigt 94 s'étend radialement dans une direction opposée à l'un 90 des deux bords longitudinaux opposés 90, 92.

Conséquemment, le pivot supérieur 72 dont le diamètre extérieur est sensiblement égal au diamètre intérieur de l'orifice 88, peut être engagé à travers l'orifice 88, tandis que le doigt 94 vient s'étendre dans la rainure hélicoïdale 82.

On retrouve plus en détail sur la [Fig. 5] le pivot supérieur 72 engagé à travers l'orifice 88 de la pièce transversale méplate 86. La pièce méplate 86 est adossée à la traverse supérieure 30, représentée partiellement.

On observera que la pièce transversale méplate 86 présente une épaisseur inférieure à la longueur du pivot supérieur 72. En conséquence, la pièce transversale méplate 86 va pouvoir être entraînée en translation entre la traverse supérieure 30 et le flasque supérieur 68. Ce faisant, le doigt 94 va pouvoir coulisser dans la rainure hélicoïdale 82, et il va alors provoquer la rotation du pivot supérieur 72 et par là même, la rotation du volet 42.

On observera que les matériaux choisis pour le doigt 94 et le pivot supérieur 72 sont suffisamment résistant à l'usure pour pouvoir supporter le fréquent coulissement de l'un dans l'autre ans échauffement ni enlèvement de matière.

Aussi, dans la position relative de la pièce transversale méplate 86 et de la traverse supérieure 30 telle qu'illustrée sur la [Fig. 5], le doigt 94 vient s'étendre à l'intérieur de la portion de rainure axiale 84 représentée sur la [Fig. 7]. Dans cette position, le pivot supérieur 72 est bloqué en rotation, sans jeu, entre les deux bords opposés de la rainure axiale 84.

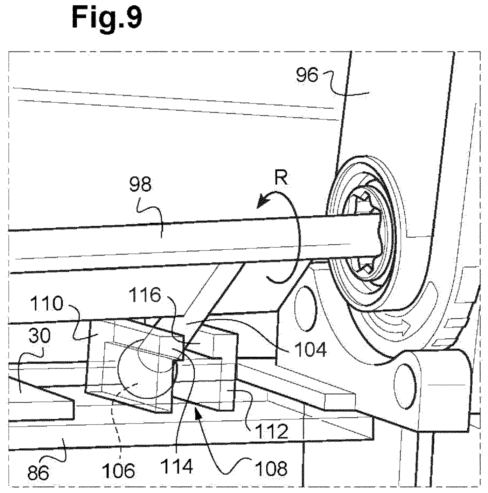

On décrira à présent en regard des [Fig. 3] et [Fig. 9], les moyens permettant d'entraîner en translation la traverse méplate 86.

Ainsi, la [Fig. 3] montre sept volets gauches alignés, et bord 52 à bord 54, de manière à obturer l'ouverture transversale 40. Le nombre de volets n'est nullement limitatif et un nombre supérieur à sept ou inférieur à sept peut être mis en oeuvre.

Pour pouvoir actionner les volets en rotation et libérer l'ouverture transversale, la pièce méplate 86 s'étend transversalement du montant médian 38 jusqu'au montant gauche 34, et entre la traverse supérieure 30 et le flasque supérieur 68 des volets gauches 42. Elle présente alors sept orifices 88 du type représenté sur la [Fig. 6], que viennent traverser respectivement les pivots supérieurs 72 des volets 42.

Les pivots supérieurs 72 des sept volets gauches 42 ici représentés sont identiques au pivot supérieur 72 illustré sur la [Fig. 7].

Selon un mode de mise en oeuvre particulièrement avantageux, les doigts des orifices 88 sont alternativement décalés de 180°. Et parallèlement, la rainure hélicoïdale 82 des pivots supérieurs 72 est également alternativement décalée de 180°. De la sorte, on équilibre les contraintes qui s'exercent en retour sur la pièce méplate 86 et on évite son coincement.

Les moyens entraînements des volets 42 comprennent un motoréducteur 96 commandable électriquement et installé dans la zone médiane 28 au droit du montant médian 38. Aussi, un arbre gauche 98 vient en prise dans le motoréducteur 96, et il s'étend transversalement jusqu'au montant gauche 34 au droit de la traverse supérieure 30 et à distance de la pièce méplate 86. L'arbre gauche 98 est guidé en rotation par un premier palier gauche 100 solidaire de la traverse supérieure 30 et situé au droit du montant gauche 34, ainsi qu'un palier intermédiaire 102 solidaire de la traverse supérieure 30 et installée à mi-distance entre le montant gauche 34 et le montant médian 38.

En outre, l'arbre gauche 98 est muni de pattes 104 terminées chacune par une rotule 106. Et chacune des rotules 106 des pattes 104 est alors en prise dans une cage 108 formée sur la pièce méplate 86. L'arbre gauche 98 est ici muni de quatre pattes 104 régulièrement espacées les unes des autres entre le motoréducteur 96 et le premier palier gauche 100.

On retrouve ainsi partiellement mais plus en détail sur la [Fig. 9], l'arbre gauche 98 emprise dans le motoréducteur 96. Aussi, on retrouve la pièce méplate 86 équipée, dans sa partie supérieure, de la cage 108.

La cage 108 comporte deux plaques 110, 112 dressées en regard l'une de l'autre sur la pièce méplate 86 et terminées par deux bordures recourbées l'une vers l'autre 114, 116. Les deux plaques 110, 112 sont orientées transversalement par rapport à la pièce méplate 86 pour autoriser le passage de la patte 104 entre les deux, tandis que la rotule 106 demeure prisonnière des deux bordures recourbées.

De la sorte, la rotule 106 peut être entraînée en translation entre les deux plaques 110, 112 parallèlement à la pièce méplate 86.

Ainsi, lorsque l'arbre gauche 98 est entraîné en rotation dans le sens trigonométrique R illustré sur la [Fig. 9] par l'intermédiaire du motoréducteur 96, la patte 104 est entraînée elle-même en pivotement de sorte que la rotule 106 vient prendre appui contre la surface supérieure de la pièce méplate 86. Partant, la pièce méplate 86 est entraînée en translation et écartée de la traverse supérieure 30.

On observera, qu'à l'inverse, lorsque l'arbre gauche 98 est entraînée en rotation dans le sens inverse, la rotule 106 vient en appui contre les deux bordures recourbées l'une vers l'autre 114, 116 et peut alors provoquer l'entraînement de la pièce méplate 86 vers la traverse supérieure 30. Conséquemment, les pivots supérieurs 72 et partant, les volets 42, sont entraînés en rotation dans un sens opposé.

Ainsi, revenant sur la [Fig. 3], lorsque l'arbre gauche 98 est entraîné en rotation par l'intermédiaire du motoréducteur 96, selon le sens trigonométrique R, la pièce méplate 86 est alors entraînée en translation suivant l'axe A des pivots 72, 74 des volets 42. Partant, les doigts 94 de tous les orifices 88 coopèrent simultanément avec les rainures hélicoïdales 82 de tous les pivots supérieurs 72 et provoque alors la rotation des pivots supérieurs 72 ensemble dans le sens horaire et par conséquent, le pivotement des volets 42 qui viennent alors libérer l'ouverture pour autoriser le passage d'air.

Comme illustré sur la [Fig. 2], la partie droite 26 est symétrique de la partie gauche 24 par rapport au plan médian Pm. Aussi, elle comprend une pièce méplate droite 86' s'étendant entre la traverse supérieure 30 et les volets droits 40. Les volets droits 40 sont respectivement images des volets gauches 42 dans un miroir.

En outre, leurs pivots supérieurs 72' sont munis d'une rainure hélicoïdale inverse par rapport à celle des pivots supérieurs des volets gauches 42.

En outre, la partie droite 26 comporte un arbre droit 98' monté coaxialement à l'arbre gauche 98 dans le motoréducteur 96.

De la sorte, le motoréducteur est adapté à entraîner en rotation simultanément dans un même sens les deux arbres 98, 98' de manière à provoquer le mouvement de translation des pièces méplates gauche 86 et droite 86' simultanément pour pouvoir entraîner les volets gauches 42 dans un sens et les volets droits 40 dans un sens opposé. De la sorte, on vient libérer l'ouverture transversale 40.

On se référera maintenant à la [Fig. 8] illustrant une variante d'exécution selon l'invention. On retrouve un pivot supérieur 72" d'un volet 42", lequel présente une rainure hélicoïdale 82" prolongée par une portion de rainure axiale inférieure 118 opposée à la portion de rainure axiale supérieure 84".

De la sorte, on comprend que le pivot supérieur 72" est maintenu bloqué en rotation lorsque le doigt 94" est en prise dans la rainure axiale inférieure 118, et ce, lorsque le volet 40" est orienté longitudinalement et où il libère l'ouverture transversale 40.

## Revendications

1. Calandre de véhicule automobile comprenant :
- une traverse supérieure (30) et une traverse inférieure (32) opposées l'une de l'autre, délimitant une ouverture transversale (40) ;
- une pluralité de volets (42, 44) présentant chacun deux bords latéraux opposés (52, 54) et deux pivots coaxiaux opposés l'un de l'autre (72, 74), les pivots de chacun desdits volets étant respectivement montés à rotation dans lesdites traverses supérieure (30) et inférieure (32) de manière à maintenir lesdits volets espacés parallèlement les uns des autres dans ladite ouverture (40) selon une direction perpendiculaire auxdites traverses ;
- des organes d'entraînement pour pouvoir entraîner lesdits volets (42, 44) en pivotement entre une position transversale dans laquelle ils sont orientés transversalement bord (52) à bord (54) dans ladite ouverture transversale pour obturer ladite ouverture transversale, et une position longitudinale dans laquelle ils sont orientés longitudinalement pour libérer ladite ouverture transversale (40) ;
**caractérisée en ce que** lesdits organes d'entrainement comprennent une pièce transversale (86) reliée par une liaison hélicoïdale (82, 94) aux pivots desdits volets (42, 44) montés dans l'une ou l'autre desdites traverses, pour pouvoir entraîner lesdits volets (42, 44) en pivotement lorsque ladite pièce transversale (86) est entraînée en translation selon ladite direction perpendiculaire auxdites traverses.

2. Calandre selon la revendication 1, **caractérisée en ce que** ladite pièce transversale (86) s'étend entre lesdits volets (42, 44) et ladite une ou l'autre desdites traverses (30, 32).

3. Calandre selon la revendication 1 ou 2, **caractérisée en ce que** lesdits pivots (72) présentent chacun une rainure hélicoïdale (82), tandis que ladite pièce transversale (86) présente une pluralité de doigts (94) venant respectivement en prise dans les rainures hélicoïdales.

4. Calandre selon l'une quelconque des revendications 1 à 3, **caractérisée en ce que** ladite pièce transversale (86) est méplate et **en ce qu'**elle présente une pluralité d'orifices (88) adaptés à recevoir lesdits pivots (72).

5. Calandre selon la revendication 3 et 4, **caractérisée en ce que** les doigts (94) s'étendent respectivement radialement en saillie dans lesdits orifices (88).

6. Calandre selon l'une quelconque des revendications 1 à 5, **caractérisée en ce que** lesdits organes d'entraînement comprennent un arbre (98) monté à rotation le long de ladite une (30) ou l'autre desdites traverses et des pattes de commande (104) s'étendant radialement dudit arbre (98) pour pouvoir coopérer avec ladite pièce transversale (86).

7. Calandre selon la revendication 6, **caractérisée en ce que** lesdites pattes de commande (104) sont reliés à ladite pièce transversale par une liaison rotule (106, 108).

8. Calandre selon la revendication 6 ou 7, **caractérisée en ce que** lesdits organes d'entraînement comprennent un motoréducteur (96) pour commander ledit arbre en rotation (98).

9. Calandre selon l'une quelconque des revendications 1 à 8, **caractérisée en ce que** ladite pièce transversale (86) s'étend entre lesdits volets (42) et ladite traverse supérieure (30).

10. Calandre selon l'une quelconque des revendications 1 à 9, **caractérisée en ce que** lesdits volets sont divisés en deux demi-pluralités de volets (42, 44) opposées l'une de l'autre par rapport à une zone médiane (28), tandis que lesdits organes d'entrainement comprennent deux pièces transversales opposées (86, 86') l'une de l'autre et reliées respectivement par une liaison hélicoïdale aux pivots (72, 72') des volets desdites deux demi-pluralités de volets. 1
